# EUROPEAN PATENT SPECIFICATION

(11) **EP 3 975 453 B1**
(45) Date of publication and mention of the grant of the patent: **01.04.2026**
(21) Application number: 20197987.9
(22) Date of filing: 24.09.2020
(51) Int. Cl.: H04B 17/309, H04W 52/32, H04W 52/14, H04W 52/42

(54) **ADAPTIVE COVERAGE OPTIMIZATION IN SINGLE-FREQUENCY NETWORKS (SFN)**
ADAPTIVE ABDECKUNGSOPTIMIERUNG IN EINZELFREQUENZNETZWERKEN (SFN)
OPTIMISATION DE COUVERTURE ADAPTATIVE DANS DES RÉSEAUX MONOFRÉQUENCE (SFN)

(43) Date of publication of application: 30.03.2022
(73) Proprietor: Rohde & Schwarz GmbH & Co. KG, 81671 München (DE)
(72) Inventor: Sinnhuber, Johannes, 81545 München (DE); Janner, Thomas, 82194 Gröbenzell (DE)
(74) Representative: Novagraaf Group

(56) References cited:
- WO-A1-2019/211134
- KR-B1- 100 829 856
- US-A1- 2020 076 711

## Description

The present application relates to single-frequency networks, and in particular to a method for adaptive optimization of reception/coverage within a SFN, as well as to a corresponding network entity and a corresponding SFN system.

In single-frequency networks, a plurality of transmitters simultaneously transmits/broadcasts a same signal over a same frequency channel. Areas of bad reception in a SFN are difficult to identify in field.

For example, EP 2 878 156 B1 discloses identifying coverage holes in cellular radio communications using measurements associated with handovers between different radio access technologies (i.e., inter-RAT handovers). US 5 465 390 A discloses determining geographic locations of the transmitters and of their technical characteristics in cellular radio communications, so as to achieve optimum compliance with a certain number of constraints, such as geographical coverage. CN 100 473 196 C discloses dynamic spectrum allocation between cellular and broadcast networks. EP 0 556 146 B1 discloses determining and optimizing an overall radio coverage in a planning phase of a cellular radio communications network. In particular, adjacent cells deploy different frequencies. EP 1 964 282 A1 discloses optimizing a joint radiation pattern of a network of adaptive emission antennas. The adaptive emission antennas comprise ground wave emission antennas radiating medium or long waves, switchable polarization ionospheric emission antennas radiating short, medium or long waves toward the ionosphere, and space wave emission antennas radiating short waves toward conurbations. KR 100 829 856 B1 discloses a method for adaptive optimization of reception within a SFN, wherein the field measurement data comprises a time delay and the optimized SFN transmission parameter comprises a dynamic time delay. This optimizes the broadcasting service area of the SFN. WO 2019/211134 A1 discloses a method for adaptive optimization of reception within a cellular network, wherein the field measurement data comprises a signal strength probed by regular radio network components and the optimized transmission parameter comprises an output power.

If areas of bad reception can be identified, it is laborious for network operators to tune the transmission parameters for a better reception. As reception conditions may change dynamically, for example depending on weather conditions or seasonal influences, ongoing manual network optimization is nearly impossible.

Accordingly, there is a need in the art to automatically tune transmission parameters to optimize reception in the SFN.

These and other objectives are achieved by the invention as defined by the appended independent claims. Further embodiments are set forth in the dependent claims and in the following description and drawings.

Advantageously, measuring the SFN reception of the signals by the one or more field probes results in a reliable coverage monitoring in the field.

Advantageously, measuring the SFN reception of the signals transmitted by the SFN transmitters and in response supplying the SFN transmitters with specifically optimized SFN transmission parameters optimizes the SFN reception without manual efforts, which leads to cost reduction.

Advantageously, this scheme effectively adresses dynamically changing reception conditions, too.

Advantageously, optimizing SFN reception in areas in which bad reception is observed effectively increases a network coverage.

Further advantages, features and object will now become evident when reading the following explanation of embodiments, when taken in conjunction with the figures of the enclosed drawings.

The features of these embodiments may be combined with each other unless specified otherwise.
Fig. 1 shows a SFN system according to a third aspect of the present disclosure,
Fig. 2 shows a flowchart of a method according to a first aspect of the present disclosure, and
Fig. 3 shows a network entity according to a second aspect of the present disclosure.

These figures are to be regarded as being schematic representations and elements illustrated therein are not necessarily shown to scale. Rather, the various elements are represented such that their function and general purpose become apparent to a person skilled in the art.

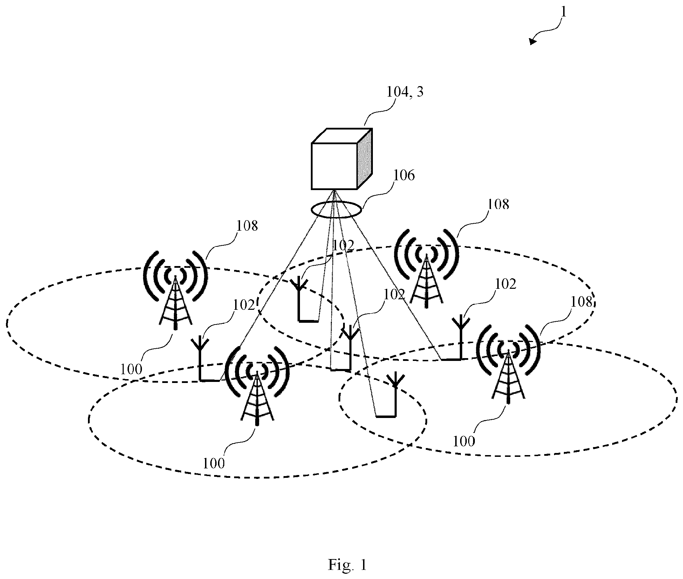

Fig. 1 shows a SFN system 1 according to a third aspect of the present disclosure.

The SFN system 1 comprises at least two independently controlled SFN transmitters 100 being arranged to simultaneously transmit/broadcast a same signal 108 over a same frequency channel. More precisely, Fig. 1 illustrates four independently controlled SFN transmitters 100 having individual coverage areas indicated by dashed circles.

The term "independently controlled" as used herein may refer to "being operable based on transmitter-specific SFN transmission parameters". For example, SFN transmitters 100 may be operated using different output powers.

The SFN system 1 further comprises one or more field probes 102 arranged in the SFN, in particular at positions within a coverage of the SFN being susceptible to bad reception. In the example of Fig. 1 five field probes 102 are shown arranged at positions where the coverage areas of individual SFN transmitters 100 intersect each other, so that signals 108 of adjacent SFN transmitters 100 might interfere and cancel each other out.

The term "field probe" as used herein may refer to a combination of a radio receiver for measuring analog performance indicators such as a modulation error ratio MER, or digital performance indicators such as a bit error ratio BER.

The term "coverage" as used herein may refer to an area in which analog and/or digital performance indicators of a reception exceeds given performance thresholds.

The term "reception" as used herein may refer to a receiver-side operation in which information content is demodulated from a physical communication channel, such as a wireless/radio channel, a wire-bound channel, or a fiber-optic channel.

The term "transmission" as used herein may refer to a transmitter-side operation in which information content is modulated onto a physical communication channel.

The one or more field probes 102 are arranged for measuring, preferably continuously, a SFN reception of signals 108 transmitted by the at least two independently controlled SFN transmitters 100, producing field measurement data, and supplying the field measurement data to the network entity 104, 3.

The SFN system 1 further comprises a network entity 104, 3.

The network entity 104, 3 may be one physical entity or a shared entity, such as a cloud entity. In the example of Fig. 1, a physical entity is depicted.

Fig. 1 schematically indicates by thin dotted lines that the one or more field probes 102 and the network entity 104, 3 are interconnected via a network communication channel 106.

As such, the field measurement data may be supplied to the network entity 104, 3, in particular using a wireless or a wire-bound channel, using e.g. a telecommunications protocol and/or an Internet protocol.

The field measurement data supplied to the network entity 104, 3 may comprise one or more of or consist of: modulation error ratio MER measured by the one or more field probes 102, and/or bit error ratio BER measured by the one or more field probes 102.

The network entity 104, 3 is arranged for computing optimized SFN transmission parameters specifically for each of the at least two SFN transmitters 100.

More specifically, the network entity 104, 3 is arranged for computing optimized SFN transmission parameters by automatically calculating, as a function of the supplied field measurement data, at least one type of SFN transmission parameter specifically optimized for each of the at least two independently controlled SFN transmitters 100.

The at least one type of SFN transmission parameter may comprise one or more of or consist of: output power of each of the at least two independently controlled SFN transmitters 100, and/or dynamic time delay of the signal transmitted by each of the at least two independently controlled SFN transmitters 100.

The term "dynamic time delay" as used herein may relate to a relative transmission delay of the signals transmitted by the at least two independently controlled SFN transmitters with respect to each other. This relative transmission delay may vary over time in response to the aforementioned dynamically changing reception conditions.

The automatic calculating is carried out in order to optimize the SFN reception of the signals 108 transmitted by the at least two independently controlled SFN transmitters 100.

The term "optimized" as used herein may refer to the circumstance that the optimization improves some given performance metric. In the example at hand, the given performance metric is the (quality/performance of) SFN reception of the signals 108 by the one or more field probes 102.

For the purpose of automatic calculating, the network entity 104, 3 comprises an Artificial Intelligence unit 304A, such as an artificial neural network trained with field measurement data and optimized SFN transmission parameters serving as examples of known input data and corresponding target result data, respectively. Supervised learning/training of such an artificial neural network involves processing the known input data and determining a difference/error between the processing result and the known target result. According to the error, probability-weighted associations between input and output of the artificial neural network that gave rise to the erroneous processing result are adjusted. Based on iterative adjustments using a plurality of examples, a capacity of the artificial neural network to yield the known target results is successively approached.

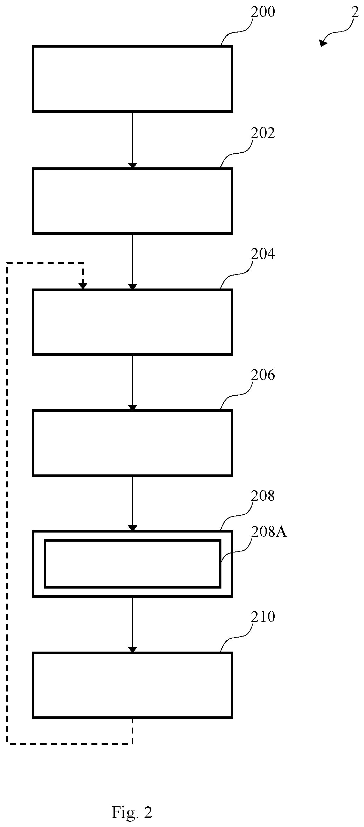

As may become more specific in connection with Fig. 2 below, the network entity 104, 3 may further be arranged to iteratively optimize the at least one type of SFN transmission parameter. In other words, optimization is repeated at least once.

Having calculated the transmitter-specifically optimized SFN transmission parameters, the network entity 104, 3 is further arranged for supplying them to each of the at least two independently controlled SFN transmitters 100.

The network entity 104, 3 may further be arranged to implement a feedback control in order to optimize the SFN transmission parameters such that the supplied field measurement data converge towards nominal values for the field measurement data. In that case, measured/supplied field measurement data may denote the process variable(s), nominal/target field measurement data may serve as the reference variable(s), and a difference between the reference variable(s) and the process variable(s) yields a control error supplied to the controller, i.e., the network entity 104, 3. The network entity 104, 3 automatically calculates SFN transmission parameters representing the manipulated variable(s) supplied to the regulated process, i.e., the radio propagation from the SFN transmitters 100 to the one or more field probes 102.

Fig. 2 shows a flowchart of a method 2 according to a first aspect of the present disclosure.

The method 2 is for adaptive optimization of reception within a single-frequency network, SFN, which comprises at least two independently controlled SFN transmitters 100. The method 2 comprises:
a) a step of arranging 202 one or more field probes 102, in particular at positions within a coverage of the SFN being susceptible to bad reception. This may require manual intervention in the field, such as planning, rolling-out and commissioning the field probes 102.
b) a step of providing 202 at least one network entity 104, 3 connected to each of the one or more field probes 102 via a network communication channel 106. This may require manual intervention either, such as configuration of the at least one network entity 104, 3 and the one or more field probes 102, providing network connectivity and so on.
c) a step of the one or more field probes 102 measuring 204, preferably continuously, a SFN reception of signals 108 transmitted by the at least two independently controlled SFN transmitters 100, and producing field measurement data;
d) a step of the one or more field probes 102 supplying 206 the field measurement data to the network entity 104, 3.

The field measurement data supplied to the network entity 104, 3 may comprise one or more of or consist of: modulation error ratio MER measured by the one or more field probes 102, and/or bit error ratio BER measured by the one or more field probes 102.
e) a step of the network entity 104, 3 computing 208 optimized SFN transmission parameters based on the supplied field measurement data.

More specifically, the network entity 104, 3 computes the optimized SFN transmission parameters by:
f) a step of the network entity 104, 3 automatically calculating 208A, as a function of the supplied field measurement data, at least one type of SFN transmission parameter specifically optimized for each of the at least two independently controlled SFN transmitters 100, in order to optimize the SFN reception of the signals 108 transmitted by the at least two independently controlled SFN transmitters 100.

The at least one type of SFN transmission parameter may comprise one or more of or consist of: output power of each of the at least two independently controlled SFN transmitters 100, and/or dynamic time delay of the signal transmitted by each of the at least two independently controlled SFN transmitters 100.

Having calculated the transmitter-specifically optimized SFN transmission parameters, the method (2) further comprises:
g) a step of the network entity 104, 3 supplying 210 the transmitter-specifically optimized SFN transmission parameters to each of the at least two independently controlled SFN transmitters 100.

Fig. 2 further indicates by a dashed arrow connecting steps 210 and 204 that the sequence of steps c) to g) may cyclically be repeated for an iterative optimization.

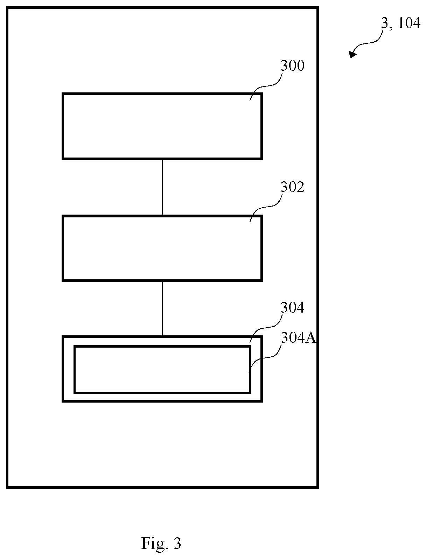

Fig. 3 shows a network entity 3 according to a second aspect of the present disclosure.

The network entity 104, 3 may be a distributed cloud unit.

The network entity 3 comprises an interface 300, a unit 302 and an interface 304.

The interface 300 is arranged for receiving field measurement data supplied by one or more field probes 102 arranged in a single-frequency network, SFN, comprising at least two independently controlled SFN transmitters 100. Each of the one or more field probes 102 is connected to the network entity 104, 3 via a network communication channel 106.

The unit 302 is arranged for computing optimized SFN transmission parameters based on the supplied field measurement data, and more specifically for automatically calculating, as a function of the supplied field measurement data, at least one type of SFN transmission parameter specifically optimized for each of the at least two independently controlled SFN transmitters 100. This is in order to optimize the SFN reception of the signals 108 transmitted by the at least two independently controlled SFN transmitters 100.

The interface 304 is arranged for supplying the transmitter-specifically optimized SFN transmission parameters to each of the at least two independently controlled SFN transmitters 100.

## Claims

1. A method (2) for adaptive optimization of reception within a single-frequency network, SFN, comprising at least two independently controlled SFN transmitters (100), the method (2) comprising the following steps:
a) arranging (202) one or more field probes (102);
b) providing (22) at least one network entity (104, 3) connected to each of the one or more field probes (102) via a network communication channel (106), the at least one network entity (104, 3) comprising an Artificial Intelligence unit (304A) comprising a neural network trained with field measurement data and optimized SFN transmission parameters;
the one or more field probes (102)
c) measuring (204), preferably continuously, a SFN reception of signals (108) transmitted by the at least two independently controlled SFN transmitters (100), and producing the field measurement data;
d) supplying (206) the field measurement data to the network entity (104, 3),
wherein the field measurement data supplied to the network entity (104, 3) comprises one or more of or consists of:
- modulation error ratio , MER, measured by the one or more field probes (102), and/or
- bit error ratio, BER, measured by the one or more field probes (102); and
the network entity (104, 3)
e) computing (208) the optimized SFN transmission parameters based on the supplied field measurement data, the computing (208) comprising automatically calculating (208A), as a function of the supplied field measurement data, at least one type of SFN transmission parameter specifically optimized for each of the at least two independently controlled SFN transmitters (100), in order to optimize the SFN reception of the signals (108) transmitted by the at least two independently controlled SFN transmitters (100),
wherein the at least one type of SFN transmission parameter comprises one or more of or consists of:
- output power of each of at least two independently controlled SFN transmitters (100), and/or
- dynamic time delay of the signal transmitted by each of the at least two independently controlled SFN transmitters (100); and
f) supplying (210) the transmitter-specifically optimized SFN transmission parameters to each of the at least two independently controlled SFN transmitters (100).

2. The method (2) of claim 1,
wherein the sequence of steps c) to f) is cyclically repeated for an iterative optimization.

3. A network entity (3), having:
an interface (300) being arranged for receiving field measurement data supplied by one or more field probes (102) arranged in a single-frequency network, SFN, comprising at least two independently controlled SFN transmitters (100), each of the one or more field probes (102) being connected to the network entity (104, 3) via a network communication channel (106),
wherein the field measurement data supplied to the network entity (104, 3) comprises one or more of or consists of:
- modulation error ratio, MER, measured by the one or more field probes (102),
and/or
- bit error ratio, BER, measured by the one or more field probes (102),
the network entity (3) further having a unit (302) being arranged for computing optimized SFN transmission parameters based on the supplied field measurement data, the unit (302) comprising an Artificial Intelligence unit (304A) comprising a neural network trained with the field measurement data and the optimized SFN transmission parameters, the unit (302) being arranged for automatically calculating, as a function of the supplied field measurement data, at least one type of SFN transmission parameter specifically optimized for each of the at least two independently controlled SFN transmitters (100), in order to optimize the SFN reception of the signals (108) transmitted by the at least two independently controlled SFN transmitters (100),
wherein the at least one type of SFN transmission parameter comprises one or more of or consists of:
- output power of each of at least two independently controlled SFN transmitters (100), and/or
- dynamic time delay of the signal transmitted by each of the at least two independently controlled SFN transmitters (100), and
the network entity (3) further having an interface (304) being arranged for supplying the transmitter-specifically optimized SFN transmission parameters to each of the at least two independently controlled SFN transmitters (100).

4. The network entity (104, 3) of claim 3,
wherein the network entity (104, 3) is a distributed cloud unit.

5. A single-frequency network, SFN, system (1) comprising:
at least two independently controlled SFN transmitters (100);
a network entity (104, 3) of claim 3 or claim 4; and
one or more field probes (102) arranged in the SFN and connected to the network entity (104, 3) via a network communication channel (106), being arranged for measuring (24), preferably continuously, a SFN reception of signals (108) transmitted by the at least two independently controlled SFN transmitters (100), producing field measurement data, and supplying the field measurement data to the network entity (104, 3).

6. The system of claim 5, wherein
the network entity (104, 3) is arranged to iteratively optimize the at least one type of SFN transmission parameter.

7. The system according to claim 5 or claim 6,
wherein the network entity (104, 3) is one physical entity or a shared entity, such as a cloud entity.

8. The system according to any of claims 5 to 7,
wherein the field measurement data are supplied to the network entity (104, 3) using a wireless or a wire-bound channel, using e.g. a telecommunications protocol and/or an Internet protocol.

9. The system according to any of claims 5 to 8,
wherein the network entity (104, 3) is arranged to implement a feedback control in order to optimize the SFN transmission parameters such that the supplied field measurement data converge towards nominal values for the field measurement data.

## Patentansprüche

1. Verfahren (2) für eine adaptive Optimierung eines Empfangs innerhalb eines Gleichwellennetzes, SFN, umfassend mindestens zwei unabhängig gesteuerte SFN-Sender (100), das Verfahren (2) umfassend die folgenden Schritte:
a) Anordnen (202) einer oder mehrerer Feldsonden (102);
b) Bereitstellen (22) mindestens einer Netzentität (104, 3), die mit jeder der einen oder der mehreren Feldsonden (102) über einen Netzkommunikationskanal (106) verbunden ist, die mindestens eine Netzentität (104, 3) umfassend eine Einheit (304A) für künstliche Intelligenz, umfassend ein neuronales Netz, das mit Feldmessdaten und optimierten SFN-Sendeparametern trainiert wird;
wobei die eine oder die mehreren Feldsonden (102)
c) vorzugsweise kontinuierlich einen SFN-Empfang von Signalen (108) messen (204), die durch die mindestens zwei unabhängig gesteuerten SFN-Sender (100) gesendet werden, und die Feldmessdaten erzeugen;
d) die Feldmessdaten an die Netzentität (104, 3) liefern (206), wobei die Feldmessdaten, die an die Netzentität (104, 3) geliefert werden, eines oder mehrere umfassen von oder bestehen aus:
- einem Modulationsfehlerverhältnis, MER, das durch die eine oder die mehreren Feldsonden (102) gemessen wird, und/oder
- einem Bitfehlerverhältnis, BER, das durch die eine oder die mehreren Feldsonden (102) gemessen wird; und die Netzentität (104, 3)
e) die optimierten SFN-Sendeparameter basierend auf den gelieferten Feldmessdaten berechnet (208), wobei das Berechnen (208) ein automatisches Ausrechnen (208A) in Abhängigkeit von den gelieferten Feldmessdaten von mindestens einer Art von SFN-Sendeparameter umfasst, die spezifisch für jeden der mindestens zwei unabhängig gesteuerten SFN-Sender (100) optimiert ist, um den SFN-Empfang der Signale (108) zu optimieren, die von den mindestens zwei unabhängig gesteuerten SFN-Sendern (100) gesendet werden,
wobei die mindestens eine Art von SFN-Sendeparameter eines oder mehrere umfasst von oder besteht aus:
- einer Ausgangsleistung von jeweils mindestens zwei unabhängig gesteuerten SFN-Sendern (100), und/oder
- einer dynamischen Zeitverzögerung des Signals, das durch jeden der mindestens zwei unabhängig gesteuerten SFN-Sender (100) gesendet wird; und
f) die senderspezifisch optimierten SFN-Sendeparameter an jeden der mindestens zwei unabhängig gesteuerten SFN-Sender (100) liefert (210).

2. Verfahren (2) nach Anspruch 1,
wobei die Abfolge der Schritte c) bis f) für eine iterative Optimierung zyklisch wiederholt wird.

3. Netzentität (3), die aufweist:
eine Schnittstelle (300), die zum Empfangen von Feldmessdaten angeordnet ist, die durch eine oder mehrere Feldsonden (102) geliefert werden, die in einem Gleichwellennetz, SFN, angeordnet sind, umfassend mindestens zwei unabhängig gesteuerte SFN-Sender (100), wobei jede der einen oder der mehreren Feldsonden (102) über einen Netzkommunikationskanal (106) mit der Netzentität (104, 3) verbunden ist,
wobei die Feldmessdaten, die an die Netzentität (104, 3) geliefert werden, eines oder mehrere der umfassen von oder bestehen aus:
- einem Modulationsfehlerverhältnis, MER, das durch die eine oder die mehreren Feldsonden (102) gemessen wird, und/oder
- einem Bitfehlerverhältnis, BER, das durch die eine oder die mehreren Feldsonden (102) gemessen wird, wobei die Netzentität (3) ferner aufweist eine Einheit (302), die zum Berechnen von optimierten SFN-Sendeparametern basierend auf den gelieferten Feldmessdaten angeordnet ist, die Einheit (302) umfassend eine Einheit (304A) für künstliche Intelligenz, umfassend ein neuronales Netz, das mit den Feldmessdaten und den optimierten SFN-Sendeparametern trainiert wird, wobei die Einheit (302) zum automatischen Ausrechnen, in Abhängigkeit von den gelieferten Feldmessdaten, mindestens einer Art von SFN-Sendeparameter angeordnet ist, die spezifisch für jeden der mindestens zwei unabhängig gesteuerten SFN-Sender (100) optimiert ist, um den SFN-Empfang der Signale (108) zu optimieren, die durch die mindestens zwei unabhängig gesteuerten SFN-Sender (100) gesendet werden,
wobei die mindestens eine Art von SFN-Sendeparameter eines oder mehrere umfasst von oder besteht aus:
- einer Ausgangsleistung von jeweils mindestens zwei unabhängig gesteuerten SFN-Sendern (100), und/oder
- einer dynamischen Zeitverzögerung des Signals, das durch jeden der mindestens zwei unabhängig gesteuerten SFN-Sender (100) gesendet wird, und
wobei die Netzentität (3) ferner aufweist eine Schnittstelle (304), die zum Liefern der senderspezifisch optimierten SFN-Sendeparameter an jeden der mindestens zwei unabhängig gesteuerten SFN-Sender (100) angeordnet ist.

4. Netzentität (104, 3) nach Anspruch 3,
wobei die Netzentität (104, 3) eine verteilte Cloud-Einheit ist.

5. Gleichwellennetzsystem, SFN-System, (1), umfassend:
mindestens zwei unabhängig gesteuerte SFN-Sender (100);
eine Netzentität (104, 3) nach Anspruch 3 oder 4; und
eine oder mehrere Feldsonden (102), die in dem SFN angeordnet und über einen Netzkommunikationskanal (106) mit der Netzentität (104, 3) verbunden sind, wobei sie zum Messen (24), vorzugsweise kontinuierlich, eines SFN-Empfangs von Signalen (108), die durch die mindestens zwei unabhängig gesteuerten SFN-Sendern (100) gesendet werden, zum Erzeugen von Feldmessdaten und zum Liefern der Feldmessdaten an die Netzentität (104, 3) angeordnet sind.

6. System nach Anspruch 5, wobei
die Netzentität (104, 3) angeordnet ist, um die mindestens eine Art von SFN-Sendeparameter iterativ zu optimieren.

7. System nach Anspruch 5 oder 6,
wobei die Netzentität (104, 3) eine physische Entität oder eine gemeinsam genutzte Entität ist, wie eine Cloud-Entität.

8. System nach einem der Ansprüche 5 bis 7,
wobei die Feldmessdaten der Netzentität (104, 3) unter Verwendung eines drahtlosen oder drahtgebundenen Kanals geliefert werden, wobei z. B. ein Telekommunikationsprotokoll und/oder ein Internetprotokoll verwendet wird.

9. System nach einem der Ansprüche 5 bis 8,
wobei die Netzentität (104, 3) angeordnet ist, um eine Rückkoppelungssteuerung zu implementieren, um die SFN-Sendeparameter derart zu optimieren, dass die gelieferten Feldmessdaten zu Nominalwerten für die Feldmessdaten konvergieren.

## Revendications

1. Procédé (2) pour une optimisation adaptative de réception au sein d'un réseau à fréquence unique, SFN, comprenant au moins deux transmetteurs SFN (100) commandés indépendamment, le procédé (2) comprenant les étapes suivantes :
a) l'agencement (202) d'une ou plusieurs sondes de champ (102) ;
b) le fait de prévoir (22) au moins une entité de réseau (104, 3) connectée à chacune de la ou des sondes de champ (102) par l'intermédiaire d'un canal de communication de réseau (106), l'au moins une entité de réseau (104, 3) comprenant une unité d'intelligence artificielle (304A) comprenant un réseau neuronal entraîné avec des données de mesure de champ et des paramètres de transmission SFN optimisés ;
la ou les sondes de champ (102)
c) mesurant (204), de préférence en continu, une réception SFN de signaux (108) transmis par les au moins deux transmetteurs SFN (100) commandés indépendamment, et produisant les données de mesure de champ ;
d) fournissant (206) les données de mesure de champ à l'entité de réseau (104, 3), dans lequel les données de mesure de champ fournies à l'entité de réseau (104, 3) comprennent un ou plusieurs parmi ou consistent en :
- - un taux d'erreur de modulation, MER, mesuré par la ou les sondes de champ (102), et/ou
- un taux d'erreur binaire, BER, mesuré par la ou les sondes de champ (102) ; et l'entité de réseau (104, 3)
e) calculant (208) les paramètres de transmission SFN optimisés sur la base des données de mesure de champ fournies, le calcul (208) comprenant le calcul automatique (208A), en fonction des données de mesure de champ fournies, d'au moins un type de paramètre de transmission SFN spécifiquement optimisé pour chacun des au moins deux transmetteurs SFN (100) commandés indépendamment, afin d'optimiser la réception SFN des signaux (108) transmis par les au moins deux SFN (100) commandés indépendamment,
dans lequel l'au moins un type de paramètre de transmission SFN comprend un ou plusieurs parmi, ou consiste en :
- une puissance de sortie de chacun d'au moins deux transmetteurs SFN (100) commandés indépendamment, et/ou
- une temporisation dynamique du signal transmis par chacun des au moins deux transmetteurs SFN (100) commandés indépendamment ; et
f) fournissant (210) les paramètres de transmission SFN optimisés spécifiquement pour le transmetteur à chacun des au moins deux transmetteurs SFN (100) commandés indépendamment.

2. Procédé (2) selon la revendication 1,
dans lequel la séquence d'étapes c) à f) est répétée cycliquement pour une optimisation itérative.

3. Entité de réseau (3), ayant :
une interface (300) agencée pour recevoir des données de mesure de champ fournies par une ou plusieurs sondes de champ (102) agencées dans un réseau à fréquence unique, SFN, comprenant au moins deux transmetteurs SFN (100) commandés indépendamment, chacune parmi la ou les sondes de champ (102) étant connectée à l'entité de réseau (104, 3) par l'intermédiaire d'un canal de communication de réseau (106),
dans laquelle les données de mesure de champ fournies à l'entité de réseau (104, 3) comprennent un ou plusieurs parmi ou consistent en :
- un taux d'erreur de modulation, MER, mesuré par la ou les sondes de champ (102), et/ou
- un taux d'erreur binaire, BER, mesuré par la ou les sondes de champ (102), l'entité de réseau (3) ayant en outre une unité (302) agencée pour calculer des paramètres de transmission SFN optimisés sur la base des données de mesure de champ fournies, l'unité (302) comprenant une unité d'intelligence artificielle (304A) comprenant un réseau neuronal entraîné avec les données de mesure de champ et les paramètres de transmission SFN optimisés, l'unité (302) étant agencée pour calculer automatiquement, en fonction des données de mesure de champ fournies, au moins un type de paramètre de transmission SFN spécifiquement optimisé pour chacun des au moins deux transmetteurs SFN (100) commandés indépendamment, afin d'optimiser la réception SFN des signaux (108) transmis par les au moins deux transmetteurs SFN (100) commandés indépendamment,
dans laquelle l'au moins un type de paramètre de transmission SFN comprend un ou plusieurs parmi, ou consiste en :
- une puissance de sortie de chacun d'au moins deux transmetteurs SFN (100) commandés indépendamment, et/ou
- une temporisation dynamique du signal transmis par chacun des au moins deux transmetteurs SFN (100) commandés indépendamment, et
l'entité de réseau (3) ayant en outre une interface (304) agencée pour fournir les paramètres de transmission SFN optimisés spécifiquement pour le transmetteur à chacun des au moins deux transmetteurs SFN (100) commandés indépendamment.

4. Entité de réseau (104, 3) selon la revendication 3,
dans laquelle l'entité de réseau (104, 3) est une unité en nuage distribuée.

5. Système de réseau à fréquence unique, SFN (1) comprenant :
au moins deux transmetteurs SFN (100) commandés indépendamment ;
une entité de réseau (104, 3) selon la revendication 3 ou la revendication 4 ; et
une ou plusieurs sondes de champ (102) agencées dans le SFN et connectées à l'entité de réseau (104, 3) par l'intermédiaire d'un canal de communication de réseau (106), agencées pour mesurer (24), de préférence en continu, une réception SFN de signaux (108) transmis par les au moins deux transmetteurs SFN (100) commandés indépendamment, produire des données de mesure de champ, et fournir les données de mesure de champ à l'entité de réseau (104, 3).

6. Système selon la revendication 5, dans lequel
l'entité de réseau (104, 3) est agencée pour optimiser itérativement l'au moins un type de paramètre de transmission SFN.

7. Système selon la revendication 5 ou la revendication 6,
dans lequel l'entité de réseau (104, 3) est une entité physique ou une entité partagée, telle qu'une entité en nuage.

8. Système selon l'une quelconque des revendications 5 à 7,
dans lequel les données de mesure de champ sont fournies à l'entité de réseau (104, 3) à l'aide d'un canal sans fil ou filaire, à l'aide, par ex., d'un protocole de télécommunications et/ou d'un protocole Internet.

9. Système selon l'une quelconque des revendications 5 à 8,
dans lequel l'entité de réseau (104, 3) est agencée pour mettre en œuvre une commande de rétroaction afin d'optimiser les paramètres de transmission SFN de telle sorte que les données de mesure de champ fournies convergent vers des valeurs nominales pour les données de mesure de champ.
